Europäisches Patentamt

European Patent Office

Office européen des brevets

(11) Publication number: **0 370 594**
**A1**

## (12) EUROPEAN PATENT APPLICATION

(21) Application number: **89305764.6**

(22) Date of filing: **07.06.89**

(51) Int. Cl.5: **F02D 43/04, F02D 41/14, F02D 35/02**

(30) Priority: **19.11.88 GB 8827078**

(43) Date of publication of application:
**30.05.90 Bulletin 90/22**

(84) Designated Contracting States:
**AT BE DE ES FR GB IT NL SE**

(71) Applicant: **FORD MOTOR COMPANY LIMITED**
**Eagle Way**
**Brentwood Essex CM13 3BW(GB)**
㊷ **BE GB IT NL SE AT**

Applicant: **FORD FRANCE S. A.**
**B.P. 307**
**F-92506 Rueil-Malmaison Cédex(FR)**
㊷ **FR**

Applicant: **FORD-WERKE AKTIENGESELLSCHAFT**
**Werk Köln-Niehl Henry-Ford-Strasse**
**Postfach 60 40 02**
**D-5000 Köln 60(DE)**
㊷ **DE**

Applicant: **FORD MOTOR COMPANY**
**County of Wayne**
**Dearborn, MI 48120(US)**
㊷ **ES**

(72) Inventor: **Eade, Derek**
**30 Roughtons**
**Galleywood Chelmsford CM2 8PF(GB)**

(74) Representative: **Messulam, Alec Moses et al**
**A. Messulam & Co. 24 Broadway**
**Leigh on Sea Essex SS9 1BN(GB)**

(54) **Engine management system.**

(57) An engine management system is described which uses as a control parameter a signal which quantitatively represents the value of the pressure within a cylinder averaged over a combustion cycle.

The signal representing the mean cylinder pressure is obtained preferably by sampling and averaging the pressure only during a short period straddling top dead centre on the compression stroke, thus permitting a mean cylinder pressure signal to be achieved in real time.

## ENGINE MANAGEMENT SYSTEM

The invention relates to engine management systems for setting the ignition timing and/or fuel to air ratio under different engine operating conditions.

There are already known engine management systems in which the quantity of fuel injected in every cycle and the setting of the ignition timing are determined by values stored in a look-up table in a computer. The look-up table stores the optimum values determined during previous calibration of the engine under known speed and load conditions.

Such systems alone cannot allow for changes in operating conditions other than load and speed. For example, engine temperature, atmospheric pressure and the fuel grade in use all affect the optimum engine calibration and fixed data in a look-up table cannot cope successfully with variations in such parameters.

One solution to problems caused by such variations is to estimate a correction based upon measurement of the temperature, pressure or other source of error. This can only be carried out when the cause of the error is known and can be quantified. With factors such as engine wear, for example, estimation of the necessary correction is not a simple matter.

An alternative approach which has been attempted in the prior art is to carry out continuous re-calibration based upon an assessment of the manner in which the engine is performing. The difficulty in this approach is in the selection of the criteria or parameters from which engine performance is to be assessed.

For example, it has been proposed to place an ionisation sensor or a pressure sensor in each cylinder ir order to assess combustion quality. In both cases the sensor is used to obtain a measure of the flame propagation speed or of the time of arrival of the flame at the ionisation sensor to determine the combustion quality. Such sensors have been used to detect the timing of the combustion peak pressure in relation to the crankshaft angle and their outputs have been used to calibrate the fuelling and ignition timing maps so as to optimise the timing of the peak pressure in the cylinder, which is related to combustion quality.

It is an object of a first aspect of the present invention to provide a measurement apparatus which can provide an indication of a control parameter which is more directly related to the engine performance.

The invention, in a second aspect, seeks to provide an engine management system which makes use of the latter control parameter to permit accurate engine calibration under a variety of operating condition.

In accordance with the first aspect of the present invention, there is provided a measurement apparatus operative to generate a signal which quantitatively represents the mean value of cylinder pressure averaged over a combustion cycle.

The indicated mean effective pressure (IMEP) is a direct measure of the combustion quality as it represents the driving force available at the piston. Direct measurement of the IMEP provides an excellent parameter for calibration of an engine management system. However, the amount of calculation required to average numerous instantaneous samples of the pressure taken during a complete combustion cycle cannot readily be carried out in real time.

To mitigate this problem, the measurement apparatus conveniently comprises a pressure transducer to be arranged, in use, within the engine cylinder, sampling means for sampling the output of the transducer at intervals over a range of crank angles straddling top dead centre at the end of the compression stroke and means for computing the average value of the samples taken during this range.

By analysing values of instantaneous pressure over many engine cycles it has been found that most of the variations which take place from one cycle to the next occur in a relatively short period straddling top dead centre (TDC) at the end of the compression stroke. Because of this feature, sampling the pressure only during this period and calculating its average provides a signal which is not equal to the IMEP but has a one to one relationship with it. It has been found that the signal is a substantially linear function of IMEP and for engine calibration purposes can be regarded as equivalent to the true IMEP. However, unlike the true IMEP, the signal is derived from sampling and averaging the cylinder pressure only over a limited range of crankshaft angle, preferably from $20^\circ$ BTDC to $80^\circ$ ATDC, and can therefore be calculated in real time.

According to the second aspect of the present invention, there is provided an engine management system in which, within at least part of the speed/load range, at least one of the fuel mixture strength and the ignition timing is determined by reference to a signal which quantitatively represents the value of the pressure within a cylinder averaged over a combustion cycle.

Preferably, the means for generating the signal which quantitatively represents the mean value of cylinder pressure comprises a pressure transducer arranged within the engine cylinder, sampling means for sampling the output of the transducer at intervals over a range of crank angles straddling top dead centre at the end of the compression stroke and means for computing the average value of the samples taken during this range.

In setting the ignition timing or the fuel to air ratio of an engine under idle conditions, a major consideration is the risk of instability which results in what is sometimes termed hunting. Because such instability cannot be sensed reliably, it is usual to err on the safe side in the setting of the fuelling and spark advance so that the engine does not run at its most economical setting.

To mitigate this disadvantage, the engine management system preferably comprises means for producing by statistical analysis a signal representing the covariance over several engine operating cycles of the mean cylinder pressure, said signal serving in the engine management system as an indication of engine stability.

The covariance of the pressure is a measure of the dispersion of the measured values of mean pressure in several operating cycles and is represented by the standard deviation of the values divided by the mean pressure.

By measuring the covariance of the signal representing the IMEP the degree of stability is sensed and the fuelling or engine timing can be set using a control loop to optimise economy. Engine instability is only a limiting factor under idle and low load conditions and under these conditions engine performance is unimportant and it is only fuel consumption that needs to be considered.

A first use of the estimated IMEP signal has been described above in setting the mixture strength and/or the spark timing to avoid engine instability at the low end of the speed/load range. There are however many further applications in engine management systems for this control parameter, as will now be described.

In the normal cruising range of the engine, the estimated IMEP signal can be directly used to optimise the engine timing since maximising IMEP necessarily maximises the available force at the piston. The only need to override this optimisation is if knocking is detected. The knocking can be detected by separately analysing the output of the pressure sensor and without the need for further hardware.

For the mixture setting, at the other end of the speed/load range, maximum IMEP is required regardless of economy. This can be achieved by increasing the mixture strength until such time as a reduction in IMEP is sensed and then reducing the mixture strength.

During cruising, maximum economy is achieved when the minimum amount of fuel is injected without a drop in IMEP and this can be achieved by reducing the mixture strength until a measures drop in estimated IMEP is noted and then slightly increasing the mixture strength.

It will be noted that the engine management system described above operates to calibrate both the fuelling map and the ignition timing map and to do so simultaneously presents problems since the optimum ignition timing depends on the mixture strength and, to a lesser extent, the optimum mixture strength varies with the ignition timing. It is possible to assume a fixed map for the ignition timing and to calibrate only the fuelling map but this is not satisfactory as the fuelling may be trying to compensate for incorrect timing.

To enable both fuelling and ignition timing to be optimised, it is preferred to re-calibrate the maps in alternation. For example, in a first group of twenty cycle, the fuelling map may have a correction applied to it and while using the corrected fuelling map in the next twenty cycles, the ignition map may be re-calibrated. By such iterative adjustment of the maps in the look-up tables, they can both be optimised over the full engine operating range.

The invention will now be described further, by way of example, with reference to the accompanying drawings, in which:

Figure 1 is a schematic block diagram of an engine management system,

Figure 2 is a graph of load versus speed graph which will serve to illustrate the different control strategies to be used under differing operating conditions in setting of the ignition timing, and

Figure 3 is a graph of specific fuel consumption (SFC) versus estimated indicated mean effective pressure (IMEP) which will serve to illustrate the different control strategies under different operating conditions for setting the fuel mixture strength.

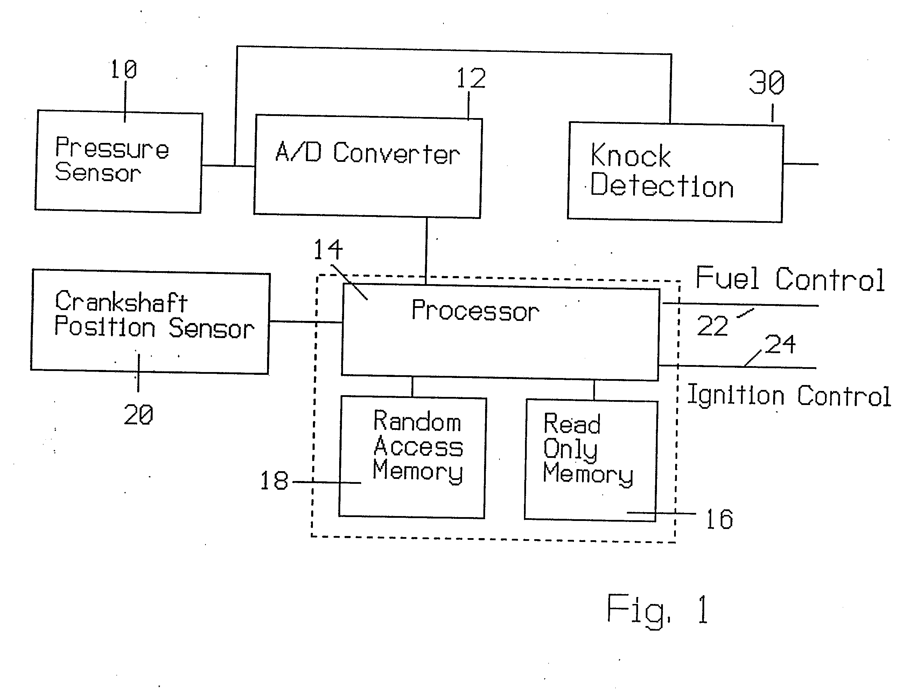

The engine management system of Figure 1, comprises in-cylinder pressure sensors 10 arranged in the individual engine cylinders connected to A/D converters 12 for converting the analogue signals from the sensors 10 into digital signals at regular sampling intervals. The sampled instantaneous pressure values are supplied to a digital computer 15 which includes a processor 14, a read only memory 16 and a random access memory 18. The digital computer receives an additional signal from a crankshaft position sensor 20 and provides output signals on lines 22 and 24 for the control of fuelling and of the spark timing. The functions performed by the digital computer will be more fully set out below.

In-cylinder pressure sensors are commonly available but have only been used, as previously mentioned, to indicate the timing of peak pressure not, as in the present invention, as a means of deriving a quantitative assessment of IMEP.

As the construction of the sensors and of the computer is well known a more detailed description of the hardware required in the implementation of the invention is not deemed necessary. Also, as the methods for programming a computer are known it is deemed sufficient to provide a description only of the functions to be performed by the digital computer.

The computer includes two look-up tables which are initially stored in the read only memory 16 (ROM) and are loaded into the random access memory 18 (RAM) while the engine is in operation. The data in the look-up tables is accessed using two co-ordinates, load and speed, and in each address location in memory there is stored the value of the ignition timing or mixture strength found to be optimum during previous calibration. The data stored in read only memory is determined by calibration during manufacture but in the random access memory it is constantly updated to suit the current operating conditions.

To update the values stored in the fuelling and ignition maps, the computer is connected to the pressure sensors 10 in the engine cylinders. The computer may work on only one cylinder, as now to be described, but it is preferred to set the fuelling and ignition timing separately for each cylinder.

The analogue signal from the pressure transducer 10 in the cylinder is analysed in two separate ways. First, it is applied to a known detonation (or knock) detection circuit 30. If detonation occurs, rapid pressure fluctuations occur after ignition and these are sensed by the use of a high pass filter and a detector in the knock detection circuit.

In the second analysis, which is preferably carried out by a separate dedicated processor within the computer 15, the pressure signal is sampled at regular intervals from $20°$ BTDC to $80°$ ATDC and the average pressure during this period is computed to produce a signal presenting the indicated mean effective pressure which will hereinafter be termed the IMEP signal, even though it is strictly speaking only an estimate of the true IMEP, since averaging is only effected over part of the engine cycle. The IMEP signal is passed to the engine management system which thus receives as its control parameters, the IMEP signal and a knock detection signal both signals being derived from the pressure transducer in the cylinder.

The calibration of the two separate maps for fuelling and ignition timing, respectively, is carried in alternation by the computer. During twenty consecutive cycles the ignition map is calibrated then in the next twenty cycles the fuelling map is calibrated, this being repeated every forty cycles.

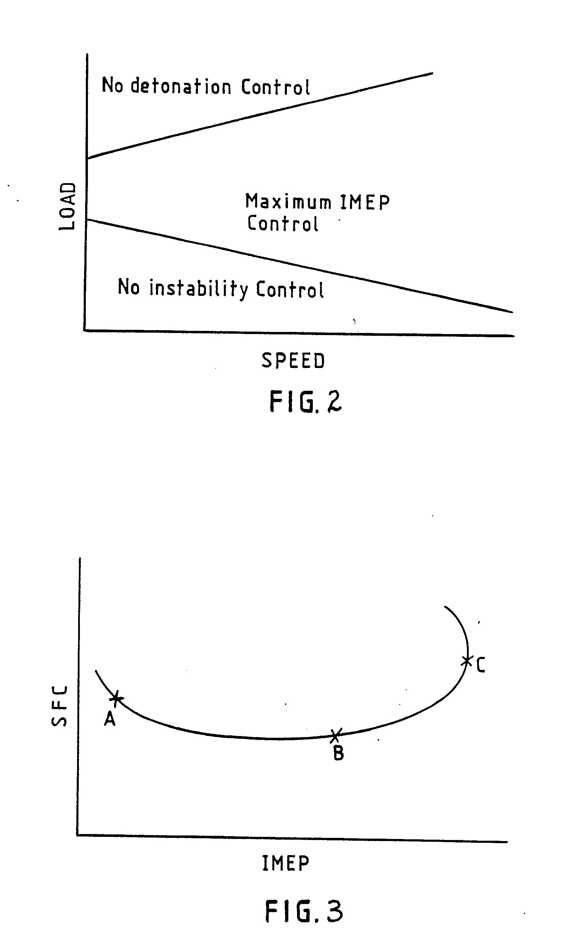

The ignition timing strategy is best understood by reference to Figure 2. This shows the engine load, as measured from manifold vacuum or preferably throttle valve position, plotted against engine speed and represent all possible operating conditions.

Under most operating conditions, the ideal ignition timing is that which maximises IMEP and the computer can be suitably programmed to make small alterations to the ignition setting while monitoring the IMEP signal, thereby arriving at an optimum setting. Control to maximise IMEP is adopted over most of the speed/load range.

At high load, especially in combination with low speed, maximising IMEP can result in detonation occurring. If this happens, the timing is immediately altered to avoid detonation and the ignition map is also modified to avoid a repetition of detonation. In this marked region of the map, the IMEP is maximised but only up to the level at which detonation does not occur.

At the low end of the speed/load range, there is a risk of instability. The computer derives a measure of the instability by determining the covariance of the IMEP signal. If this covariance exceeds a predetermined limit the ignition is modified and in this range of operation the aim is to maximise IMEP while avoiding excessive instability.

Turning now to the fuelling strategy, under low load and throttle position, the aim is to avoid instability as represented by the computed covariance of the IMEP signal. It can be seen from Figure 3 that in this range, which is near the point A, reduction in mixture strength leads to increased IMEP and is desirable. However, at the point A, instability is sensed and the mixture must again be strengthened despite the reduction in IMEP. Power in this range is not the major consideration and the aim is to maximise fuel economy without encountering instability. The stored value of fuel mixture is therefore gradually weakened until the covariance exceeds acceptable limits, whereupon the mixture is again enriched.

At the other end of the speed/load range, maximum IMEP is required regardless of economy. This is achieved by increasing the mixture strength until such time as a reduction in IMEP is sensed and then reducing the mixture strength. This corresponds to the point designated C in Figure 3.

During cruising, maximum economy is achieved at the point B in Figure 3, when the minimum amount of fuel is injected without a drop in IMEP and this can be achieved by reducing the mixture strength until a measured drop in estimated IMEP is noted and then slightly increasing the mixture strength.

The computation time required for the processes described above does not affect the operation of the engine since the latter instantly derives its desired values of mixture strength and ignition timing from the look-up tables. The operation of the computer is to re-calibrate the look-up tables as the engine is in use to take into account such disturbances as engine wear, fuel grade, and atmospheric pressure.

## Claims

1. An engine management system characterised in that, within at least part of the speed/load range, at least one of the fuel mixture strength and the ignition timing is determined by reference to a signal which represents quantitatively the value of the pressure within a cylinder averaged over a combustion cycle.

2. A system as claimed in claim 1, wherein the means for generating the signal which represents quantitatively the mean value of cylinder pressure comprises a pressure transducer (10) arranged within the engine cylinder, sampling means (12) for sampling the output of the transducer at intervals over a range of crank angles straddling top dead centre at the end of the compression stroke and means (14) for computing the average value of the samples taken during this range.

3. A system as claimed in claim 2, wherein the output of the pressure transducer (10) is sampled only in the period from 20° BTDC to 80° ATDC.

4. A system as claimed in any preceding claim, further comprising means (14) for producing by statistical analysis a signal representing the covariance over several engine operating cycles of the mean cylinder pressure, said signal serving in the engine management system as an indication of engine stability.

5. A system as claimed in claim 5, wherein means are provided to cause an increase in mixture strength or a retard of the ignition timing in response to the computed covariance exceeding a predetermined limit under low speed and low load operation of the engine.

6. A system as claimed in any preceding claim, wherein under normal cruising conditions (moderate speed and load) the ignition is set by closed loop control to maximise the mean effective cylinder pressure.

7. A system as claimed in any preceding claim, wherein under high load operating conditions the mixture strength is set by closed loop control to maximise the mean effective cylinder pressure.

8. A system as claimed in any preceding claim, wherein under moderate speed and load conditions, fuel economy is maximised by setting the the mixture strength by the use of a closed control loop such that weakest mixture is set without reducing the the mean effective cylinder pressure.

9. A system as claimed in any preceding claim, wherein calibration of the fuelling and ignition timing are performed in alternating succession.

10. A measurement apparatus operative to generate a signal which quantitatively represents the mean value of cylinder pressure averaged over a combustion cycle.

11. A measurement apparatus as claimed in claim 10, comprising a pressure transducer (10) to be arranged, in use, within the engine cylinder, sampling means (12) for sampling the output of the transducer at intervals over a range of crank angles straddling top dead centre at the end of the compression stroke and means for computing the average value of the samples taken during this range.

Fig. 1

EP 0 370 594 A1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 8, no. 154 (M-310)[1591], 18th July 1984; & JP-A-59 51 160 (TOYOTA JIDOSHA K.K.) 24-03-1984 * Abstract * | 1,2,6,7 ,10,11 | F 02 D 43/04 F 02 D 41/14 F 02 D 35/02 |
| X | PATENT ABSTRACTS OF JAPAN, vol. 8, no. 136 (M-304)[1573], 23rd June 1984; & JP-A-59 37 241 (TOYOTA JIDOSHA KOGYO K.K.) 29-02-1984 * Abstract * | 1,8 | |
| X | US-A-4 760 825 (TATSUO MORITA) * Figures 9,22; column 7, lines 1-5; column 9, line 14 - column 10, line 13; column 13, lines 6-55; column 18, line 36 - column 19, line 20; column 19, lines 37-46; column 20, line 44 - column 22, line 47 * | 1-3,6- 11 | |
| Y | | 4,5 | |
| Y | GB-A-2 149 535 (EPICAM LTD) * Page 1, lines 9-77; page 2, lines 110-118; page 3, lines 72-77 * | 4,5 | TECHNICAL FIELDS SEARCHED (Int. Cl.5) F 02 P F 02 D |
| A | PATENT ABSTRACTS OF JAPAN, vol. 8, no. 177 (M-317)[1614], 15th August 1984; & JP-A-59 68 565 (TOYOTA JIDOSHA K.K.) 18-04-1984 | 4,5 | |
| A | PATENT ABSTRACTS OF JAPAN, vol. 10, no. 29 (M-451)[2086], 5th February 1986; & JP-A-60 184 968 (MAZDA K.K.) 20-09-1985 | | |

The present search report has been drawn up for all claims

| Place of search | Date of completion of the search | Examiner |
|---|---|---|
| THE HAGUE | 14-09-1989 | MOUALED R. |